# EUROPEAN PATENT APPLICATION

(11) **EP 4 826 480 A1**
(43) Date of publication of application: **21.10.2026**
(21) Application number: 26170386.2
(22) Date of filing: 02.04.2026
(51) Int. Cl.: G05D 1/246, G05D 1/646, B62D 15/02

(54) **CONTROL DEVICE, OPERATION METHOD OF CONTROL DEVICE, AND PROGRAM**

(30) Priority: 15.04.2025 JP 2025067015
(71) Applicant: HONDA MOTOR CO., LTD., Tokyo 105-8404 (JP)
(72) Inventor: NISHIZAWA, Yuta, Saitama, 3510193 (JP); KOGA, Shumon, Saitama, 3510193 (JP); AIZAWA, Koki, Saitama, 3510193 (JP)
(74) Representative: Kiwit, Benedikt

(57) **Abstract**

A control device configured to control a movable body including a drive wheel and a driven wheel, the control device comprising: control means for controlling a trajectory tracking operation of the movable body, based on a state equation of the movable body, wherein the state equation is differentially flat, and
the control means derives an acceleration input value of the movable body for the movable body to track a target trajectory, based on the state equation that is differentially flat.

## Description

### BACKGROUND OF THE INVENTION

### Field of the Invention

The present invention relates to a control device, an operation method of the control device, and a program.

### Description of the Related Art

In recent years, there is an increasing demand for ultra-compact movable bodies (micro mobility vehicles) for supporting movements of people in small regions. Micro mobility vehicles include vehicles each having a riding capacity of one person or so, vehicles that travel carrying baggage along with a person, instead of carrying passengers, and the like. The micro mobility vehicles necessitate an autonomous movement technology in free spaces such as sidewalks in addition to an automated driving technology for traveling on roadways in order to enable traveling in both movement regions of automobiles and movement regions of pedestrians. There is a case where a micro mobility vehicle is configured with, for example, a relatively simple drive system such as two-wheel differential in order to achieve a small size as a movable body and traveling with a small turn.

Japanese Patent Application Laid-Open No. 2016-136319 proposes a technique in which in an autonomous movable carriage including two drive wheels and a caster, a turning angle of the caster with respect to an advancing direction is obtained, based on the orientation of the caster and a speed command value for the advancing direction of the carriage, and when the turning angle reaches a predetermined turning angle, the speed command value is limited.

In a case where the micro mobility vehicle includes drive wheels of a differential two-wheel configuration and a driven wheel, the driven wheel affects the motion of the micro mobility vehicle, and the tracking capability to track a target trajectory that makes the micro mobility vehicle travel to an intended position may be degraded, or a riding comfort may be degraded. In this regard, Japanese Patent Application Laid-Open No. 2016-136319 merely limits a speed command value when the turning angle becomes equal to or larger than a predetermined turning angle.

### SUMMARY OF THE INVENTION

The present invention has been made in view of the above problems, and provides a technique for improving tracking capability to track a target trajectory of a movable body including drive wheels and a driven wheel.

According to one aspect of the present invention, there is provided a control device as specified in claim 1. Optional features are specified in claim 2 to 8. According to one aspect of the present invention, there is provided an operation method of a control device as specified in claim 9. According to one aspect of the present invention, there is provided a program as specified in claim 10.

### BRIEF DESCRIPTION OF THE DRAWINGS

FIG. 1A is a side view of a movable body according to one embodiment;
FIG. 1B is a diagram illustrating an internal configuration of the movable body according to one embodiment;
FIG. 2 is a block diagram illustrating a configuration example of a control system of the movable body according to one embodiment;
FIG. 3 is a block diagram illustrating a functional configuration example related to a control unit of the movable body according to one embodiment;
FIG. 4 is a view schematically illustrating an example of a grid map according to one embodiment;
FIG. 5 is a diagram for describing a state equation of the movable body according to one embodiment;
FIG. 6 is an explanatory diagram of a relationship between an angle of a driven wheel, a wheelbase, and an angular velocity according to one embodiment;
FIG. 7 is a diagram showing one example of a result of system identification according to one embodiment;
FIG. 8A is a diagram showing a result of trajectory tracking in a benchmark method;
FIG. 8B is a diagram showing a result of trajectory tracking in the technique according to the present embodiment; and
FIG. 9 is a diagram showing simulation results of adaptive tracking according to one embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

In the following embodiment, as an example of a movable body, which is a micro mobility vehicle, an ultra-compact electric vehicle having a riding capacity of one person or so will be described as an example. Note that micro mobility vehicles may include a vehicle that travels carrying a baggage along with a person, instead of carrying the person. In addition, the present embodiment is not limited to this example as long as it is a movable body including a driven wheel (a freely rotatable swivel caster), and is applicable to any movable body other than an electric vehicle. Further, although a case where there is one driven wheel will be described as an example in the following description, the number of driven wheels is not limited to one, and may be two or more.

With regard to the above-described movable body such as the micro mobility vehicle, it is useful when it becomes possible to autonomously travel in consideration of riding of a person, frequent changes of the target position, and non-use of a high-precision map. When a passenger gets in a movable body, unlike an unmanned movable body for delivery, if an unnatural travel trajectory or a travel trajectory that does not consider riding comfort is selected, an uneasy feeling may be given to the passenger in the movable body. In addition, when accepting a target position instruction from a passenger, it is necessary to handle a change of the target position. Furthermore, it is not always limited to traveling on a specific fixed route. In addition, in order to be capable of travelling in both a movement region for automobiles and a movement region for pedestrians, it is necessary to appropriately travel in a region where a high-precision map is not prepared.

A movable body according to the present embodiment autonomously travels without using a high-precision map toward a target position that can be changed. In order to autonomously travel without using a high-precision map, a region in which the movable body 100 is capable of travelling is identified from information recognized from an output from a detection unit to be described later. As will be described later, the movable body generates a grid map indicating a travelable region and a non-travelable region of the movable body, and is capable of using the grid map to generate a travel trajectory of the movable body. However, the present invention is applicable regardless of the presence or absence of a grid map or a high-precision map. It is to be noted that an example of using a grid map to be described later is merely an example, and does not limit the scope of the present invention.

### <Configuration of Movable Body>

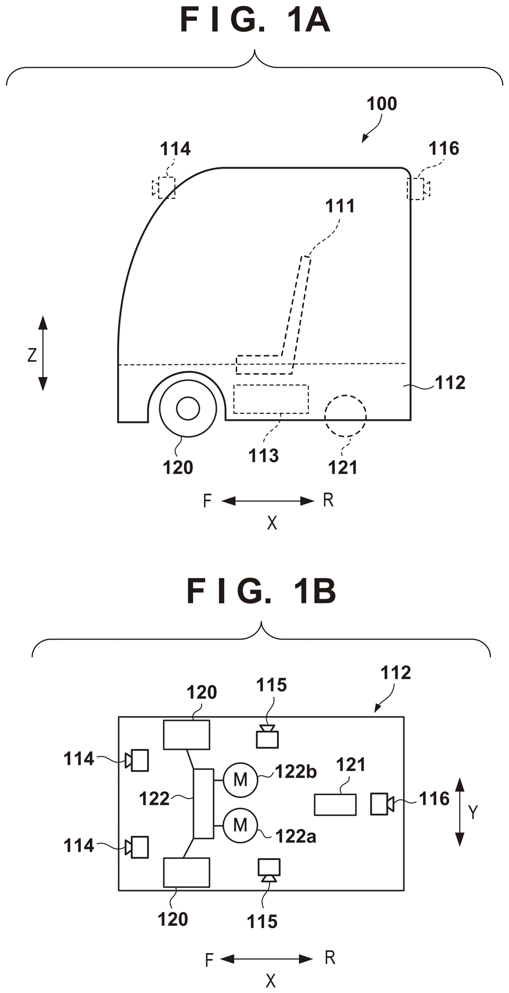

A configuration of a movable body 100 according to the present embodiment will be described with reference to FIGS. 1A and 1B. FIG. 1A illustrates a side view of the movable body 100 according to the present embodiment, and FIG. 1B illustrates an internal configuration of the movable body 100. In the drawings, arrow X indicates a front-and-rear direction of the movable body 100, F indicates the front, and R indicates the rear. Arrows Y and Z respectively indicate a width direction (a left-and-right direction) and an up- and-down direction of the movable body 100.

The movable body 100 is an electric autonomous vehicle that includes a travel unit 112, and uses a battery 113 as a main power supply. The battery 113 is, for example, a secondary battery such as a lithium ion battery, and the movable body 100 autonomously travels by the travel unit 112 with electric power supplied from the battery 113. The travel unit 112 has a form of a three-wheeled vehicle including a pair of left and right drive wheels 120, which are front wheels, and one driven wheel 121, which is a rear wheel. Note that the travel unit 112 may have another form such as a form of a four-wheeled vehicle. The movable body 100 includes, for example, a single seat 111.

The travel unit 112 includes a drive mechanism 122. The drive mechanism 122 is a mechanism that rotates a corresponding drive wheel 120 with motors 122a and 122b as drive sources. By rotating each of the drive wheels 120, the drive mechanism 122 is capable of moving the movable body 100 forward or rearward. By making a difference in rotation between the motors 122a and 122b, the drive mechanism 122 is also capable of changing an advancing direction of the movable body 100. The driven wheel 121 is capable of making a turn with Z direction as a rotation axis.

The movable body 100 includes detection units 114 to 116, each of which detects a target object in the surroundings of the movable body 100. The detection units 114 to 116 form an external sensor group that monitors the surroundings of the movable body 100. In the case of the present embodiment, each of the detection units 114 to 116 is an imaging device that captures an image in the surroundings of the movable body 100, and includes, for example, an optical system such as a lens and an image sensor. However, instead of or in addition to the imaging device, a radar or a light detection and ranging (LiDAR) may be used.

For example, two detection units 114 are disposed in a front part of the movable body 100 to be spaced apart from each other in Y direction, and are mainly used to detect a target object ahead of the movable body 100. The detection units 115 are each disposed in a left part and a right part of the movable body 100, and are mainly used to detect target objects on lateral sides of the movable body 100. The detection unit 116 is disposed in a rear part of the movable body 100, and is mainly used to detect a target object on the rear of the movable body 100.

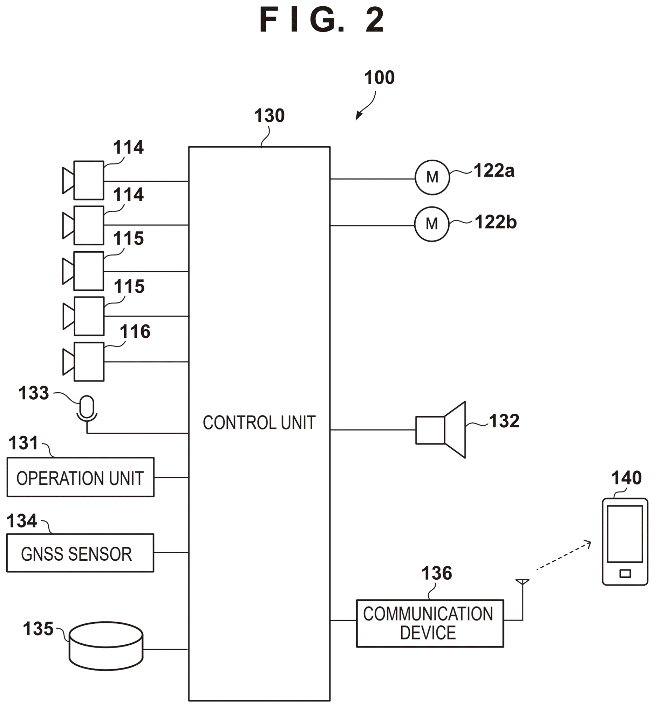

FIG. 2 is a block diagram of a control system of the movable body 100 according to the present embodiment. The movable body 100 includes a control unit (ECU) 130. The control unit 130 includes one or more processors represented by a CPU, a memory device such as a semiconductor memory, an interface with an external device and the like. The memory device stores a program to be executed by the processor, data to be used by the processor for processing, and the like. A plurality of sets of the processor, memory device, and interface may be provided for respective functions of the movable body 100 to be capable of communicating with each other.

The control unit 130 acquires outputs (for example, image information) from the detection units 114 to 116, input information of an operation unit 131, voice information that has been input from a voice input device 133, and the like, and performs corresponding processing. The control unit 130 conducts control of the motors 122a and 122b (travel control of the travel unit 112) and display control of a display panel included in the operation unit 131, gives a notification to a passenger of the movable body 100 by sound, and outputs information. The control unit 130 may perform processing using a machine learning model for image recognition (for example, a deep neural network) on the outputs from the detection units 114 to 116. In addition, the control unit 130 may perform processing using a machine learning model for voice recognition (for example, a deep neural network) on the outputs from the voice input device 133.

The voice input device 133 includes, for example, a microphone, and collects voice audio of the passenger of the movable body 100. The control unit 130 is capable of recognizing the input voice and performing corresponding processing. A global navigation satellite system (GNSS) sensor 134 receives a GNSS signal, and acquires a current position of the movable body 100.

A storage device 135 includes a storage medium that stores various types of data. The storage device 135 may also store programs to be executed by the processors, data to be used by the processors for processing, and the like. The storage device 135 may store various parameters (for example, learned parameters, hyperparameters, and the like of a deep neural network) of a machine learning model for voice recognition or image recognition to be performed by the control unit 130.

A communication device 136 is a communication device capable of communicating with an external device (for example, a communication terminal 140, which is possessed by a user) on wireless communication, such as Wi-Fi or 5th generation mobile communication system.

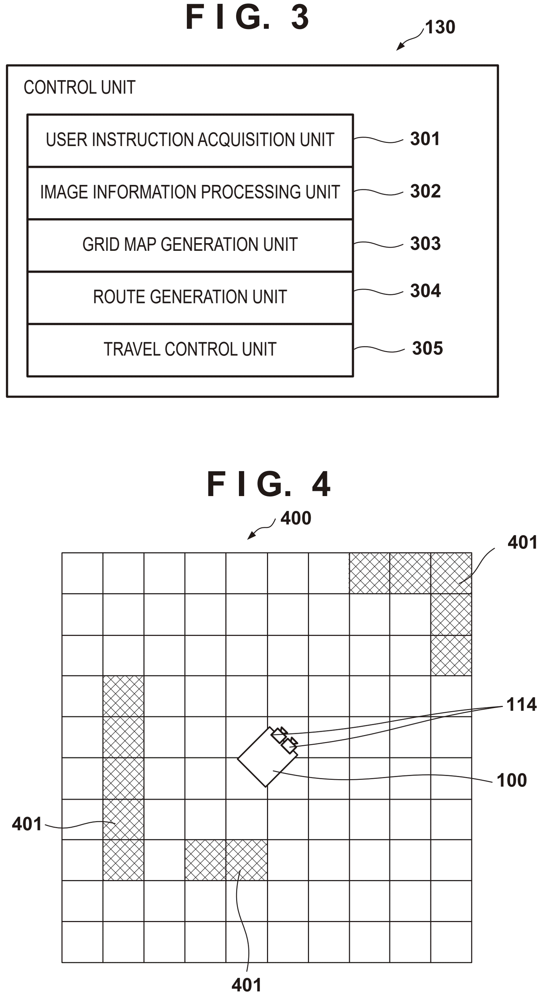

Next, a functional configuration example of the control unit 130 will be described with reference to FIG. 3. A user instruction acquisition unit 301 acquires a user instruction input via the operation unit 131 or the voice input device 133. The user instruction can include designation of a final target position at which the movable body 100 should arrive. The final target position may be a position of a target object designated by an uttered voice among target objects recognized in the images that have been output from the detection units 114 to 116. In addition, the user instruction may include a change instruction for a travel trajectory, such as a right turn or a left turn, while the movable body 100 is traveling.

An image information processing unit 302 recognizes positions, shapes, and the like of a travel road and an obstacle, based on the outputs (for example, image information) of the detection units 114 to 116. The recognition of the positions, shapes, and the like of the travel road and the obstacle ahead of the movable body 100 is performed, for example, by obtaining a depth from the movable body 100 using a stereo image obtained from the two detection units 114. In order to recognize the travel road and the obstacle, a machine learning model (for example, a deep neural network) for image recognition that has been learned beforehand may be applied to a monocular image or a stereo image.

A grid map generation unit 303 generates a grid map representing a travelable region and a non-travelable region of the movable body 100 in the vicinity of the movable body 100, based on the positions, shapes, and the like of the travel road and the obstacle that have been recognized by the image information processing unit 302. FIG. 4 schematically illustrates an example of the grid map according to the present embodiment. The example illustrated in FIG. 4 schematically illustrates a state in which the detection unit 114 captures an image ahead of the movable body 100 and a grid map 400 indicating non-travelable regions 401 each indicating the presence of an obstacle and the other regions (travelable regions) is generated.

The grid map generation unit 303 shifts the grid map 400 in such a manner that the movable body 100 is located at the center of the grid map as the movable body 100 moves. The grid map generation unit 303 assigns the non-travelable region 401 to a corresponding grid on the grid map 400 according to a recognition result of the image information processing unit 302. The grid map generation unit 303 generates the grid map by adding and deleting the non-travelable region 401 as the movable body 100 moves.

A route generation unit 304 generates a trajectory (a target trajectory) on which the movable body 100 travels using the map generated by the grid map generation unit 303. The route generation unit 304 can use, for example, a known dynamic window approach (DWA) to generate the travel trajectory. According to the DWA, it is possible to generate the trajectory on which the movable body 100 travels in consideration of constraints such as kinematics and acceleration. However, the method for generating the trajectory is not limited to this example, and trajectory may be generated using any other method.

A travel control unit 305 controls the traveling of the movable body 100, based on a state equation of the movable body to be described later in accordance with the trajectory that has been generated by the route generation unit 304. Hereinafter, description will be made with regard to an example of a state equation of the movable body for improving tracking capability, in a case where the movable body 100 tracks the trajectory that has been generated by the route generation unit 304, and trajectory tracking control using such a state equation.

### <Modeling (State Equation of Movable Body)>

In attempting to cause the movable body to operate and track the trajectory that has been generated by the route generation unit 304, it is difficult to conduct the trajectory tracking control due to the influence of the driven wheel. Hence, in the present embodiment, a state equation that considers the influence of the driven wheel is introduced for the movable body including the drive wheels and the driven wheel.

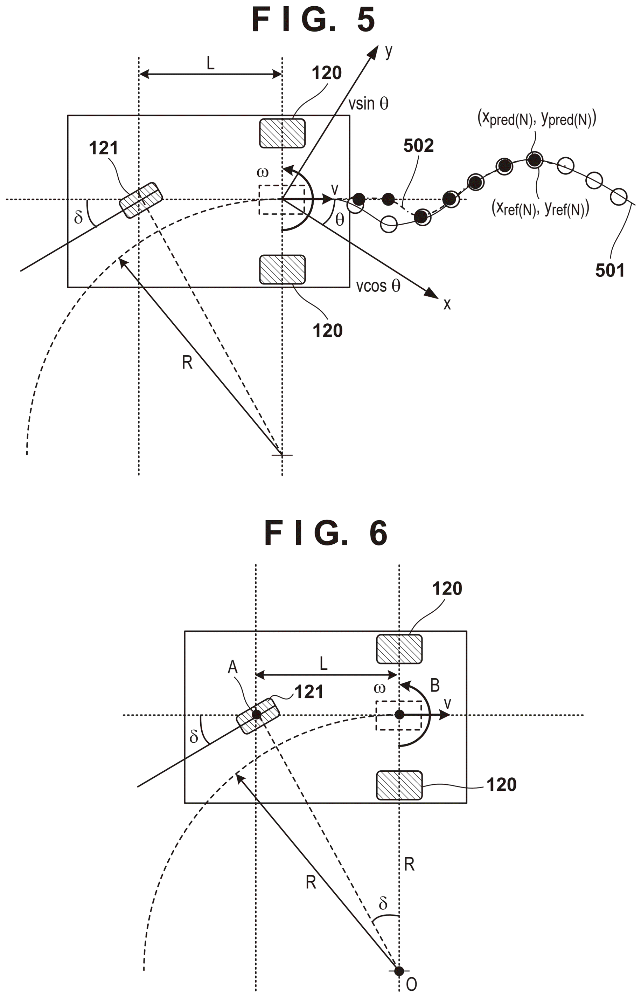

Here, FIG. 5 is an explanatory diagram of the movement of the movable body 100 including two drive wheels 120 and one driven wheel 121. In FIG. 5, v represents a speed in an advancing direction of the movable body 100, ω represents an angular velocity, L represents a wheelbase which is a length from an axle of the drive wheel 120 to a center position of the driven wheel 121, R represents a curvature radius, θ represents an angle (a direction angle) of the movable body 100, and δ represents an angle of the driven wheel 121. The angle δ of the driven wheel 121 is an angle formed by the direction of the driven wheel 121 and the advancing direction of the movable body 100. In addition, in FIG. 5, a target trajectory 501 represents a target trajectory that has been generated by the route generation unit 304. A white circle indicates a target position (x_{ref(N)}, y_{ref(N)}) on the target trajectory 501. A predicted trajectory 502 represents a trajectory derived using the technique according to the present embodiment. A black circle indicates a predicted position (x_{pred(N)}, y_{pred(N)}) on the predicted trajectory 502.

The angle of the driven wheel 121 is delayed with respect to the target angle of the driven wheel 121, and thus it is conceivable that deviation from the target trajectory may occur. Thus, a response (a delay) of an actual angle δ of the driven wheel with respect to a target angle δ_{ref} of the driven wheel is modeled as Expression (0-1) using a transfer function in a first-order lag system.
[Mathematical Expression 0-1] $δ \left(s\right) = \frac{K}{1 + {T}_{c} s} {δ}_{ref} \left(s\right)$ (0-1)

Here, K represents a stationary gain, and T_{c} represents a time constant.

In addition, as illustrated in FIG. 6, R represents a radius of rotation of the driven wheel 121. By focusing on a triangle OAB, AOB = δ is established, and thus a relationship tanδ = L/R is satisfied. From this relational expression and v = Rω, the angle of the driven wheel can be expressed in δ = -arctan(L/R) =-arctan(Lω/v). In this manner, it is possible to estimate the angle of the driven wheel 121, based on a speed v of the movable body 100, an angular velocity ω of the movable body 100, and a distance ( wheelbase L) from the axle of the drive wheel 120 to the driven wheel 121. By using this, the target angle δ_{ref} of the driven wheel 121 is expressed in the following Expression (0-2).
[Mathematical Expression 0-2] ${δ}_{ref} = - arctan \left(\frac{{Lω}_{ref}}{{v}_{ref}}\right)$ (0-2)

Here, ω_{ref} represents a target angular velocity, and v_{ref} represents a target speed. Then, discretization and inverse Z-transformation in a backward difference method are performed on Expression (0-1), and thus the following Expression (0-3) is finally obtained.
[Mathematical Expression 0-3] ${δ}_{k} = \frac{{T}_{c}}{{T}_{c} + dt} {δ}_{k - 1} + \frac{K ∗ dt}{{T}_{c} + dt} {δ}_{ref}$ (0-3)

Here, dt represents a cycle time.

Expression (0-4) is a state equation of the movable body 100, and can be expressed as Expression (0-5).
[Mathematical Expression 0-4] ${x}_{k + 1} = f \left({x}_{k}, {u}_{k}\right)$ (0-4) [Mathematical Expression 0-5] $\left[\begin{matrix}{x}_{k + 1} \\ {y}_{k + 1} \\ {θ}_{k + 1} \\ {δ}_{k + 1}\end{matrix}\right] = \left[\begin{matrix}{x}_{k} + v cos {θ}_{k} dt \\ {y}_{k} + v sin {θ}_{k} dt \\ {θ}_{k} - \frac{v}{L} tan {δ}_{k} dt \\ \frac{{T}_{c}}{{T}_{c} + dt} {δ}_{k} - \frac{K ∗ dt}{{T}_{c} + dt} ∗ arctan \left(\frac{Lω}{v}\right)\end{matrix}\right]$ (0-5)

Here, x represents a position (x) of the movable body 100, y represents a position (y) of the movable body 100, θ represents an angle of the movable body 100, δ represents an angle of the driven wheel 121, v represents a speed of the movable body 100, ω represents an angular velocity of the movable body 100, L represents a wheelbase of the movable body 100, K represents a stationary gain, T_{c} represents a time constant, and dt represents a cycle time.

In the state equation of the movable body indicated in Expression (0-5), according to the first expression, it is possible to express the next position xₖ₊₁ of the movable body 100 by adding (vcosθₖ × time change dt) representing a change amount in x direction to the current position xₖ. Similarly, according to the second equation, it is possible to express the next position yₖ₊₁ of the movable body 100 by adding (vsinθₖ × time change dt) representing a change amount in y direction to the current position yₖ.

In addition, in Expression (0-5), the next angle θₖ₊₁ of the movable body 100 is expressed, based on the current angle θₖ of the movable body 100 and the current angle δₖ of the driven wheel 121. That is, the angle change of the movable body 100 is expressed using the angle of the driven wheel 121, and this is a key point. As described above with reference to FIG. 15, δ =-arctan (Lω/v) is established, and Lω/v = tan(-δ) =-tanδ is established. Here, since ω = dθ/dt is established, it is possible to express dθ/dt = (-v/L)tanδ. By discretizing this, θₖ₊₁ - θₖ = (-v/L)tanδ*dt is established, and the third expression in Expression (0-5) is obtained.

In addition, it is possible to obtain the fourth expression in Expression (0-5) by substituting Expression (0-2) into Expression (0-3). That is, the fourth expression in Expression (0-5) is an expression obtained by using a transfer function that transfers a delay of the angle of the driven wheel with respect to the target angle of the driven wheel. In this manner, by expressing the delay of the angle of the driven wheel 121 (the delay of the actual angle with respect to the target angle) in the first-order lag system, it becomes possible to express the next angle δₖ₊₁ of the driven wheel 121 using the current angle δₖ of the driven wheel 121, the wheelbase L, the angular velocity ω of the movable body 100, and the speed v.

### <Outline of Differential Flatness and Backstepping>

In the present embodiment, description will be made with regard to the trajectory tracking control by differential flatness and backstepping using a model of the movable body 100 including the drive wheels (differential two-wheel) 120 and the driven wheel 121. First, the dynamics of the movable body 100 is given as Ackermann kinematics for two-dimensional coordinates of the movable body 100 and time evolution of rotation related to the dynamics of the driven wheel written in a primary response related to the angular velocity.

Then, a differential flatness property of a system having flat outputs in two-dimensional coordinates is exhibited, and in addition, the differential flatness and the backstepping are combined together, and thus the trajectory tracking control that ensures the Lyapunov stability is derived. The effectiveness of the flatness-backstepping-based trajectory tracking control has been exhibited by conducting experiment using the real movable body 100. Description will be made with regard to the performance that has been exhibited to be superior to the conventional benchmark method. In addition, the present embodiment is also extendable to an adaptive tracking control rule in a case where parameter uncertainty is present in the dynamics of the driven wheel, and its performance has been demonstrated by numerical simulation.

Note that a differential flat system denotes a system in which a reference state and a reference input can be determined as a function of time differential of a reference output, and is a subclass of a nonlinear system with which it is possible to systematically design a time-varying trajectory tracking control Lyapunov function. By using the differential flatness, it is possible to derive a virtual linear system using a global coordinate transformation that ensures equivalence between a linear system and a nonlinear system.

In addition, the backstepping method denotes a method for configuring an adaptive control system based on an output error, instead of an extension error, in a case where the relative order is the second order or higher in the continuous time adaptive control. More specifically, the backstepping method denotes a method for setting virtual input and output (an input and output relationship) in each subsystem in consideration of a hierarchical structure system in the same dimension as a relative order in which the output error is set as one component, and sequentially configuring an adaptive control system that stabilizes each subsystem using its virtual input not to contradict causality. According to the backstepping method, since the relative order is the first order in each subsystem, it becomes possible to configure the adaptive control system without using the extension error.

### <Description of Problem>

As illustrated in FIG. 1, consideration will be given to the dynamics of the movable body 100 including two drive wheels (two-wheel differential) 120 and one driven wheel (a tail wheel) 121. The movable body 100 is driven by individually operating the rotation speeds of the two drive wheels 120, and thus it becomes possible to control both the linear speed v and the angular velocity ω. The angle δ of the driven wheel 121 depends only on the movements of the drive wheels 120. Looking at the relative angle of the front wheels and the driven wheel in opposite directions, the dynamics resemble a so-called Ackermann steering model, which consists of two front wheels and two rear wheels, and which is often used in vehicle models. The dynamics of the movable body 100 according to the present embodiment is expressed as follows.
[Mathematical Expression 1] $\dot{x} \left(t\right) = v \left(t\right) cos \left(θ\left(t\right)\right)$ (1) [Mathematical Expression 2] $\dot{y} \left(t\right) = v \left(t\right) sin \left(θ\left(t\right)\right)$ (2) [Mathematical Expression 3] $\dot{θ} \left(t\right) = - \frac{v \left(t\right)}{L} tan \left(δ\left(t\right)\right)$ (3) [Mathematical Expression 4] $\dot{v} \left(t\right) = a \left(t\right)$ (4)

Here, (*x*, *y*) ∈ *R*² represents the two-dimensional position of the movable body 100, *θ* ∈ [0,2π) represents the angle of the movable body 100, *v* ∈ *R* represents the linear speed of the movable body 100, a ∈ *R* represents the linear acceleration of the movable body 100, *δ* ∈ [-*π*, *π*) represents the angle of the driven wheel 121, and *L* ∈ *R* represents the wheelbase of the movable body 100. However, the actual response of the driven wheel angle to a given reference driven wheel angle is accompanied by a delay. By being motivated by this, in the present embodiment, the response of the driven wheel is modeled in primary dynamics verified in the system identification by experiment to be described later. The delay model of the driven wheel is given by the following Expression.
[Mathematical Expression 5] ${T}_{c} \dot{δ} \left(t\right) + δ \left(t\right) = - K arctan \left(\frac{Lω \left(t\right)}{v \left(t\right)}\right)$ (5)

Here, *T_{c}* ∈ ***R*** represents a time constant, represents a constant, and *ω* ∈ ***R*** represents an input of the angular velocity of the movable body 100. Expressions (1) through (5) respectively correspond to the expressions included in Expression (0-5), which has been described in "Modeling (State Equation of Movable Body)".

Here, the problem of trajectory tracking to be addressed is as follows. Problem: In a case where the sensor states (x(t), y(t), v(t), θ(t), and δ(t)) are given in accordance with Expressions (1) through (5) for a given trajectory on two-dimensional coordinates (xᵣ(t), yᵣ(t)), the tracking control of [a, ω] is designed to achieve lim_{t→∞}[x(t) - xᵣ(t), y(t) - yᵣ(t)] = [0, 0].

### <Trajectory Tracking Control Design>

### A. Differential Flatness

A well-known approach in trajectory generation of a nonlinear system includes differential flatness. When a given system is differentially flat, the presence of unique mapping from a given desired output to the control input is ensured as a feedforward design, and the presence of a dynamic feedback controller that tracks the desired trajectory in feedback linearization is also ensured (M. J. Van Nieuwstadt and R. M. Murray, "Real-time trajectory generation for differentially flat systems," International Journal of Robust and Nonlinear Control: IFAC-Affiliated Journal, vol. 8, no. 11, pp. 995-1020, 1998.). Here, the definition of the differential flatness includes as follows.

### •Definition 1.

A system *ẋ* = *f*(*x, u*) including a state *x* ∈ ***Rⁿ*** and an input *u* ∈ ***R**^{m}* is called differentially flat, including a flat output *z* = *ζ*(*x,u,u*, ... ,*u*^{(*l*)}) with respect to a transformation ζ and an integer *l* ∈ ***Z**₊*, in a case where a state like *x* = *x̅*(*z*, *ż*, ... , *z*^{(*l*)}) and *u* = *u̅*(*z,ż*, ... , *z*^{(*l*)}) and a transformation into an input from a flat output are present.

Furthermore, the following proposition can be presented.
- Proposition 1. The system of Expressions (1) through (5) is differentially flat, including flat outputs x and y. Note that the proof of Proposition 1 will be described later with reference to Appendix A.

### B. Trajectory Tracking Control Design and Main Theorem

Since the complete system of Expressions (1) through (5) has been shown to be differentially flat, it is possible to design dynamic feedback linearization control that tracks a desired trajectory. However, similar to the proof of Proposition 1, a third-order differential of a flat output is necessary for an input, and thus a designed dynamic feedback controller processes a third-order system that necessitates acceleration (*ẍ, ÿ*) in two-dimensional coordinates as the sensor state. This actually includes lots of noise. On the other hand, in the present embodiment, a backstepping design related to the differential flatness of subsystems of Expressions (1) and (2) is proposed. In this design, only the linear speed of the movable body, the two-dimensional position, and the angles of the movable body and the driven wheel are necessary.

The derivation of the control design will be described in the following. By further performing time differential on Expressions (1) and (2) and using Expressions (3) and (4), it is possible to derive the following Expression.
[Mathematical Expression 6] $\left[\begin{matrix}{x}^{¨} \\ {y}^{¨}\end{matrix}\right] = \left[\begin{matrix}cos \left(θ\right) & - v sin \left(θ\right) \\ sin \left(θ\right) & v cos \left(θ\right)\end{matrix}\right] \left[\begin{matrix}a \\ - \frac{v}{L} tan \left(δ\right)\end{matrix}\right]$ (6)

Here, consideration is given to a nominal controller (a*, ω*) to be defined as follows. Here, a* represents an acceleration input value of the movable body 100 for the movable body 100 to track the target trajectory. In addition, ω* represents an angular velocity input value of the movable body 100 for the movable body 100 to track the target trajectory.
[Mathematical Expression 7] $\left[\begin{matrix}{a}^{∗} \\ {ω}^{∗}\end{matrix}\right] = {\left[\begin{matrix}cos \left(θ\right) & - v sin \left(θ\right) \\ sin \left(θ\right) & v cos \left(θ\right)\end{matrix}\right]}^{- 1} \left[\begin{matrix}{u}_{x} \\ {u}_{y}\end{matrix}\right]$ (7)

Here, uₓ and u_{y} are defined as follows.
[Mathematical Expression 8] ${u}_{x} = {{x}^{¨}}_{r} - {k}_{dx} \left(v cos\left(θ\right)-{\dot{x}}_{r}\right) - {k}_{px} \left(x-{x}_{r}\right)$ (8) [Mathematical Expression 9] ${u}_{y} = {{y}^{¨}}_{r} - {k}_{dy} \left(v sin\left(θ\right)-{\dot{y}}_{r}\right) - {k}_{py} \left(y-{y}_{r}\right)$ (9)

Here, positive gain parameters k_{dx} > 0, kₚₓ > 0, k_{dy} > 0, and k_{py} > 0 are selected. It is assumed to set a = a*. In such a case, Expression (6) becomes Expression (10).
[Mathematical Expression 10] $\begin{matrix}\left[\begin{matrix}{x}^{¨} \\ {y}^{¨}\end{matrix}\right] = \left[\begin{matrix}cos \left(θ\right) & - v sin \left(θ\right) \\ sin \left(θ\right) & v cos \left(θ\right)\end{matrix}\right] \left[\begin{matrix}{a}^{∗} \\ {ω}^{∗} - {ω}^{∗} - \frac{v}{L} tan \left(δ\right)\end{matrix}\right] \\ = \left[\begin{matrix}{u}_{x} - sin \left(θ\right) φ \\ {u}_{y} + cos \left(θ\right) φ\end{matrix}\right]\end{matrix}$ (10)

Here, Expression (7) is used and φ is defined as follows.
[Mathematical Expression 11] $φ = - \frac{{v}^{2}}{L} tan \left(δ\right) - {η}^{∗}$ (11) [Mathematical Expression 12] ${η}^{∗} = - sin \left(θ\right) {u}_{x} + cos \left(θ\right) {u}_{y}$ (12)

In order to create *φ̇* = - *cφ* , the angular velocity input ω is designed with a backstepping design. A time differential of Expression (11) is obtained as follows.
[Mathematical Expression 13] $\dot{φ} = - \frac{v}{L} \left(2a tan\left(δ\right)+\frac{v}{{cos}^{2} \left(δ\right)}\dot{δ}\right) - {\dot{η}}^{∗}$ (13)

Therefore, by substituting Expression (5) in Expression (13), it becomes possible to derive a design of ω as stated in the following theorem in order to achieve *φ̇* = -*cφ* in which the stability is ensured.

•Theorem 1. Consideration is given to a closed-loop system including models of Expressions (1) through (5) and a tracking control rule of [a, ω] = [a*, ω*].
[Mathematical Expression 14] ${a}^{∗} = cos \left(θ\right) {u}_{x} + sin \left(θ\right) {u}_{y}$ (14) [Mathematical Expression 15] ${ω}^{∗} = - \frac{v}{L} tan \left(\frac{1}{K}\left(δ+{T}_{2}{F}^{∗}\right)\right)$ (15)

Expressions (14) and (15) are obtained, and each variable is found in Expressions (8), (9), (11), (12), and (16) through (19).
[Mathematical Expression 16] ${F}^{∗} = \frac{{cos}^{2} \left(δ\right)}{{v}^{2}} \left(L\left(cφ-{\dot{η}}^{∗}\right)-2va tan\left(δ\right)\right)$ (15) [Mathematical Expression 17] ${\dot{η}}^{∗} = \frac{v}{L} tan \left(δ\right) \left(cos\left(θ\right){u}_{x}+sin\left(θ\right){u}_{y}\right) - \left(sin\left(θ\right){\dot{u}}_{x}-cos\left(θ\right){\dot{u}}_{y}\right)$ (17) [Mathematical Expression 18] ${\dot{u}}_{x} = {{x}^{⃛}}_{r} - {k}_{dx} \left(a cos\left(θ\right)+\frac{{v}^{2}}{L}tan\left(δ\right)sin\left(θ\right)-{{x}^{¨}}_{r}\right) - {k}_{px} \left(v cos\left(θ\right)-{\dot{x}}_{r}\right)$ (18) [Mathematical Expression 19] ${\dot{u}}_{y} = {{y}^{⃛}}_{r} - {k}_{dy} \left(a sin\left(θ\right)-\frac{{v}^{2}}{L}tan\left(δ\right)cos\left(θ\right)-{{y}^{¨}}_{r}\right) - {k}_{py} \left(v sin\left(θ\right)-{\dot{y}}_{r}\right)$ (19)

In such a case, with regard to the reference error state vectors $x = \left[x-{x}_{r},\dot{x}-{\dot{x}}_{r}\right]$ and $y = \left[y-{y}_{r},\dot{y}-{\dot{y}}_{r}\left(t\right)\right]$ and φ in Expression (11), the origin is globally, exponentially stable in the meaning of Lyapunov. That is, there is a positive constant λ > 0 that satisfies V(t) ≤ V(0)e^{-λt}. Here, with regard to positive definite matrices ${P}_{x} ∈ {R}_{+}^{2 \times 2}$ and ${P}_{y} ∈ {R}_{+}^{2 \times 2}$, and a positive constant d > 0,
[Mathematical Expression 20] $V \left(t\right) = {x}^{T} {P}_{x} x + {y}^{T} {P}_{y} y + \frac{d}{2} {φ}^{2}$ (20) is obtained. The proof of stability will be described below with reference to Appendix B.

In this manner, by selecting *φ̇* that satisfies *φ̇* = -*cφ* using the backstepping method, and resolving ω again using the relationship of Expression (5), it becomes possible to indirectly design ω that is desired as the control input.

According to the present embodiment, it becomes possible to confirm that the state equations of the movable body in Expressions (1) through (5) are differentially flat, so that the nonlinear system can be transformed into a framework of a linear system by applying linear feedback (partial linearization). Therefore, it is possible to derive the acceleration input value (a*) of the movable body 100 for the movable body 100 to track the target trajectory, based on the differentially flat state equation of the movable body 100. In addition, by applying the backstepping method to the differentially flat state equation of the movable body 100, it is possible to derive the angular velocity input value (ω*) of the movable body 100 for the movable body 100 to track the target trajectory. By using the derived acceleration input value and speed input value, it becomes possible to achieve the control to track the target trajectory.

### <Experiment>

By performing hardware experiment using the movable body 10, the feasibility and performance of the approach according to the present embodiment have been demonstrated. First, system identification is conducted, and the target angular velocity and the angle of the driven wheel of the movable body 100 are modeled using a continuous time transfer function as a primary response. Next, as a comparison of quantitative performance between the technique according to the present embodiment and the benchmark method, a trajectory tracking experiment is performed on a given reference trajectory with a plurality of curvatures.

As the benchmark method, "pure pursuit", which is a known movable body route tracking algorithm, is used (M. Samuel, M. Hussein, and M. B. Mohamad, "A review of some pure-pursuit based path tracking techniques for control of autonomous vehicle," International Journal of Computer Applications, vol. 135, no. 1, pp. 35-38, 2016.). In this technique, an angular velocity necessary for reaching a position on a trajectory separated from the position of the movable body by a look-ahead distance (LD) is calculated. As the LD decreases, the tracking error decreases, but the behavior of the movable body becomes unstable. As the LD increases, the tracking error increases, but the behavior of the movable body becomes stable.

### <A. Setup for Experiment>

Software of the movable body 100 according to the present embodiment is implemented using RobotOperationSystem2 (ROS2). In this experiment, the following three modules are implemented.
(1) Localization: A position (x, y) of the movable body 100 is calculated using information acquired from left and right wheel speed sensors and an inertial measurement unit (IMU) mounted on the movable body 100. The sampling frequency is, for example, 20 Hz.
(2) Trajectory tracking controller: The linear speed v and the angular velocity ω of the movable body 100 are determined, based on a designated reference trajectory and the position of the movable body 100. The sampling frequency is, for example, 20 Hz.
(3) Low-level controller: Actual rotation speeds of the left and right wheels are calculated from the linear speed v and the angular velocity ω that have been determined by the trajectory tracking controller. The rotation of the wheels is controlled by a two degree of freedom controller including a feedback controller based on a proportional-integral-derivative (PID) controller and a feedforward controller that considers dynamics. The sampling frequency is, for example, 100 Hz.

### <B. System Identification>

Single input single output system identification experiment was conducted in order to model the dynamics of the driven wheel 121 using continuous time primary transfer function. The purpose of the experiment is to estimate the time constant T_{c} and the gain K in Expression (5). The input is the reference angle of the driven wheel 121, and the output is the actual angle of the driven wheel that has been collected from a rotary encoder attached to the movable body 100. The reference driven wheel angle δ_{ref} is calculated in
[Mathematical Expression 21]. ${δ}_{ref} = - K arctan \left(\frac{{Lω}_{ref}}{{v}_{ref}}\right)$ (21)

In order to ensure the safety of the experiment and to prevent excessive input of the actuator, the reference linear speed and the angular velocity of the movable body are limited to -0.5 [m/s] ≤ v_{ref} ≤ 1.11 [m/s] and -1.0 [rad/s] ≤ ω_{ref} < 1.0 [rad/s], and the angular acceleration is limited between -0.98 [m/s2] and 0.98 [m/s2]. The identification input is generated from Expression (21) with a reference speed v_{ref} as a ramp signal of 0.6 m/s and the reference angular velocity ω_{ref} as a chirp signal between -1.0 [rad/s] and 1.0 [rad/s]. The maximum frequency of the chirp signal is set to 0.15 Hz, which is feasible under constraints of the reference angular velocity and the acceleration. The experiment is conducted twice for model estimation and accuracy confirmation under the same conditions, and mutual verification is conducted. For the model estimation, "SystemIdentificationToolbox" of MATLAB (registered trademark) is used. As a result of the system identification, a transfer function including a time constant T_{c} = 0.149 and a gain K = 0.941 was derived. The accuracy of the model was evaluated using the following fit.
[Mathematical Expression 22] $Fit = 100 \times \left(1-\frac{\left‖y-\hat{y}\right‖}{\left‖y-mean\left(y\right)\right‖}\right)$ (22)

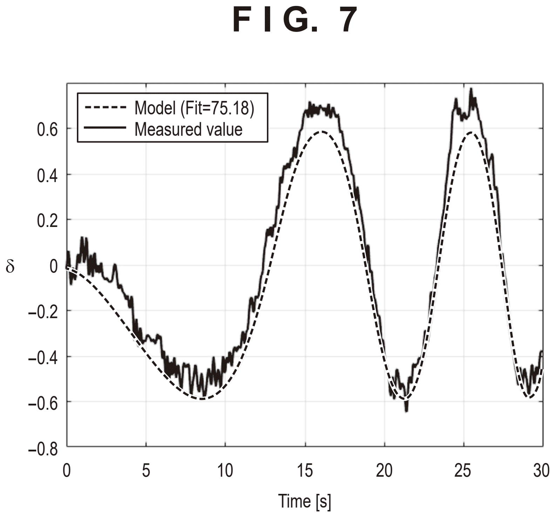

Here, y represents a measured value and ŷ represents an estimated value. This index represents the accuracy of the estimated model, and has a maximum value 100% when the estimated model completely matches the actual output. In a case where the fit is high, the estimated model is accurate. The fit of the transfer function obtained by the experiment was 75.18% as shown in FIG. 7. FIG. 7 is a diagram showing one example of a result of system identification according to the present embodiment. The vertical axis represents the angle δ of the driven wheel 121, and the horizontal axis represents time. The measured value and the output value of the estimated model according to the present embodiment are shown, and the fit between them is 75.18%.

### <C. Trajectory Tracking>

A trajectory tracking experiment was conducted using the actual movable body 100, and the effectiveness of the controller in the real world was verified. In this experiment, while the movable body 100 is moving, the positions of the movable body 100 acquired from the localization module are compared with the reference trajectory. Furthermore, the stability of the behavior related to the magnitude of the rotational acceleration is compared using sensor information collected from the inertial measurement unit (IMU). The designed control is filtered by a saturation function in the range of between -1.47 [m/s2] and 1.47 [m/s2] for both the acceleration and the angular acceleration in order to meet hardware limitations. Other conditions are the same as in the system identification experiment.

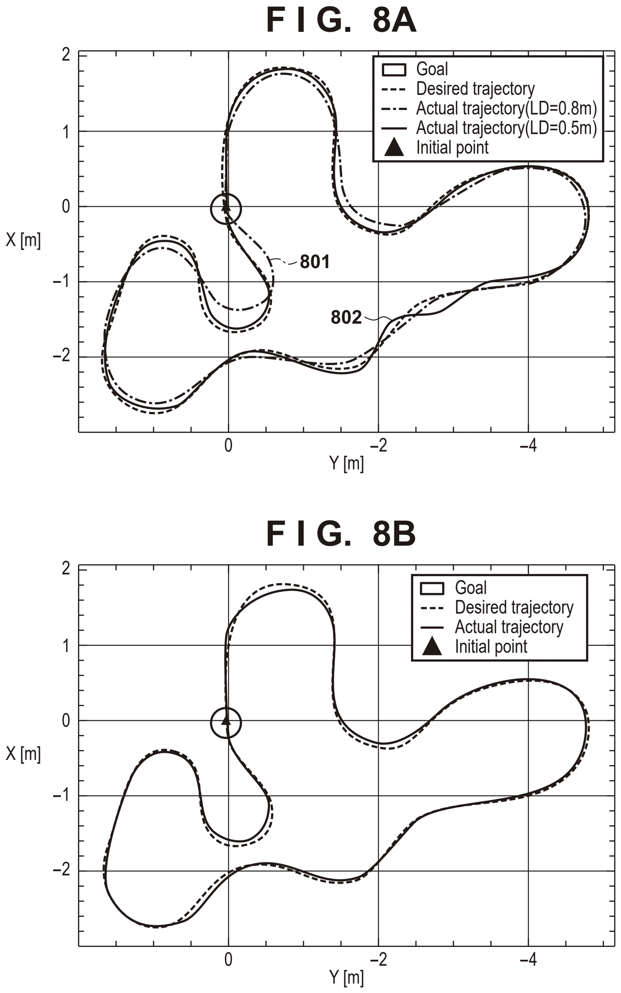

The reference trajectory is set to a course including a plurality of curves. This course can be generated by manually setting profiles of the speed and the angular velocity including acceleration and deceleration, and inputting each speed profile into a general differential drive geometry model. Here, FIG. 8A shows a result of the trajectory tracking in the benchmark method. FIG. 8B shows a result of the trajectory tracking in the technique according to the present embodiment. In FIGS. 8A and 8B, the vertical axis represents the distance in X direction on an XY plane, and the horizontal axis represents the distance in Y direction on the XY plane. A route that goes around the trajectory from a start point indicated by a triangle to an end point indicated by a circle is tracked. In FIG. 8A, a solid line 801 indicates a trajectory in a case of the look-ahead distance (LD) = 0.8 m, and a solid line 802 indicates a trajectory in a case of the look-ahead distance (LD) = 0.5 m. In addition, a broken line represents a desired target trajectory. In FIG. 8B, a solid line indicates a result of the trajectory tracking in the technique according to the present embodiment. As is apparent from FIGS. 8A and 8B, it is understood that the technique according to the present embodiment tracks the target trajectory with higher accuracy than the result of a smaller LD (LD = 0.5 m) having a smaller tracking error out of the results of the benchmark method.

**[Table 1]**

| | ADE | FDE | MDE | MAE |
|---|---|---|---|---|
| Benchmark method (LD=0.5) | 0.159 | 0.155 | 0.316 | 1.222 |
| Benchmark method (LD=0.8) | 0.455 | 1.206 | 1.206 | 1.060 |
| Proposed method | 0.061 | 0.041 | 0.186 | 0.885 |

In addition, Table 1 shows results of quantitative analysis of the tracking performance using four indexes including: an average displacement error (ADE) that is the average of the Euclidean distance errors at each point in time; a final displacement error (FDE) that is a distance error at an end point; a maximum displacement error (MDE) that is the maximum distance error in the entire route; and an average absolute value error (MAE) of the angular acceleration. ADE, FDE, and MDE are evaluation indexes related to tracking accuracy. MAE is an evaluation index related to the stability of the movable body.

As a result of quantitative evaluation, it was verified that the technique according to the present embodiment had the smallest distance error in the three evaluation criteria (ADE, FDE, and MDE), and had excellent performance. Furthermore, it was exhibited that the value of MAE for each acceleration was the smallest in the technique according to the present embodiment. This exhibits that the technique according to the present embodiment not only has excellent tracking performance but also contributes to achievement of smooth operation of the movable body.

### <Adaptive Tracking under Parameter Uncertainty>

The above result is assumed that the parameters of the dynamics of the driven wheel 121, that is, the time constant T_{c} and the gain K are given to the user by system identification, but these parameters may change depending on a road characteristic or the load of the movable body. However, conducting the system identification in all situations is not feasible in reality. Hence, in the present embodiment, there is a further proposal for an adaptive trajectory tracking design by making control input while updating unknown parameters, under uncertainty of these parameters.

### <A. Design and Theorem>

As will be described below, the adaptive rule is derived by the Lyapunov design. First, in order to make the dynamics linearly dependent on an uncertain parameter,
[Mathematical Expression 23] $\left.\begin{matrix}{p}_{1} : = \frac{1}{K} \\ {p}_{2} : = \frac{{T}_{c}}{K}\end{matrix}\right\}$ (23) is defined.

*p̂*₁(*t*) and *p̂*₂(*t*) are adaptive variables of those parameters. Therefore, the adaptive control in which Expression (15) is replaced with the adaptive variables is written in Expression (24).
[Mathematical Expression 24] $ω = - \frac{v}{L} tan \left({\hat{p}}_{1}\left(t\right)δ+{\hat{p}}_{2}\left(t\right)F\right)$ (24)

Then, by substituting Expression (24) into the dynamics of φ in Expression (13), Expression (25) is obtained.
[Mathematical Expression 25] $\dot{φ} = - cφ + \frac{{δv}^{2}}{{p}_{2} {Lcos}^{2} \left(δ\right)} {{p}^{˜}}_{1} + \frac{v}{{p}_{2} L} \left(L\left(cφ-{ω}^{∗}\right)-2a tan\left(δ\right)\right) {{p}^{˜}}_{2}$ (25)

Here,. *p̃*₁ = *p*₁ - *p̂*₁ and *p̃*₂ = *p*₂ - *p̂*₂ are established. Next, the Lyapunov function of the adaptive control is considered as Expression (26).
[Mathematical Expression 26] ${V}_{ada} = V + {γ}_{1} {{p}^{˜}}_{1}^{2} + {γ}_{2} {{p}^{˜}}_{2}^{2}$ (26)

Here, V is defined by Expression (39) to be described later, and γ₁ > 0 and γ₂ > 0 denote positive constants. By conducting time differential of Expression (26) and using the results of Appendix B to be described later and Expression (25), the adaptive rule of an unknown parameter and its theoretical description can be derived as follows.

•Theorem 2. Consideration is given to a closed-loop system including Expressions (1) through (5) and the feedback control rule of Expressions (14), (16) through (19), and (24), and then the parameter adaptive rule is given by Expressions (27) and (28).
[Mathematical Expression 27] ${\dot{\hat{p}}}_{1} \left(t\right) = {β}_{1} \frac{{φδv}^{2}}{{cos}^{2} \left(δ\right)}$ (27) [Mathematical Expression 28] ${\dot{\hat{p}}}_{2} \left(t\right) = {β}_{2} vφ \left(L\left(cφ-{ω}^{∗}\right)-2a tan\left(δ\right)\right)$ (28)

Here, β₁ > 0 and β₂ > 0 denote optionally selected positive parameters. Then, with regard to the Lyapunov function of Expression (26), there are positive constants γ₁ > 0 and γ₂ > 0 that satisfy Expression (29) and Expression (30).
[Mathematical Expression 29] ${V}_{ada} \left(t\right) \leq {V}_{ada} \left(0\right) , ∀ t \geq 0$ (29) [Mathematical Expression 30] ${lim}_{t \to ∞} \left[x\left(t\right),y\left(t\right),φ\left(t\right)\right] = 0$ (30)

That is, the adaptive variables *p̂*₁ and *p̂*₂ are bounded, and ensure that the trajectory of the movable body 100 tracks a desired trajectory, that is, lim_{t→∞}(x(t) - xᵣ(t)) = 0 and lim_{t→∞}(y(t) - yᵣ(t)) = 0 are satisfied.

This proof is a simple extension of the proof of Theorem 1 to be described later in Appendix A in consideration of a Lyapunov function V_{ada}, and is thus omitted.

In this manner, according to the present embodiment, predetermined parameters (T_{c} and K) in Expression (15) derived from the expression (Expression (5)) that represents the dynamics of the driven wheel 121 are obtainable as a function of time in the adaptive control.

### <B. Simulation Results>

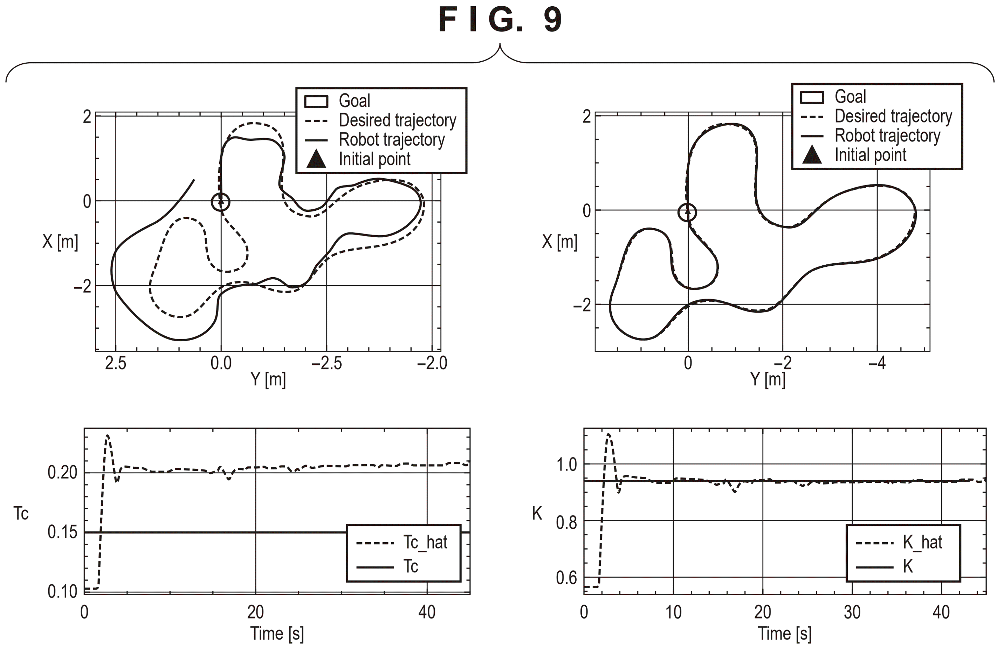

The effectiveness of the adaptive tracking design proposed in Theorem 2 has been exhibited by numerical simulation. The parameters of the dynamics of the driven wheel 121, namely, T_{c} and K, can be values obtained from the above-described system identification. However, there is uncertainty in these parameters, and in particular, T_{c} is set to be lower by 30% and K is set to be lower by 40%. The adaptive rule of the parameter of Theorem 2 and its adaptive tracking rule are applied, and the adaptive gain is set so that β₁ = 5 and β₂ = 0.1 are satisfied. Simulation results in such a case are shown in FIG. 9.

FIG. 9 shows simulation results of adaptive tracking. With regard to the uncertainty of the initial parameters, *T̂_{C}*(0) is set to be lower by 30% than T_{c} and *K̂*(0) is set to be lower by 40% than K. In a simulation result (upper left in FIG. 9) in which non-adaptive control was conducted while the uncertainty of the parameters was maintained, the trajectory was separated from the reference trajectory. On the other hand, in a simulation result (upper right in FIG. 9) in which the adaptive control of these parameters was conducted, good performance in trajectory tracking was maintained. In addition, it is understood that a parameter adaptation result of *T̂_{C}* (lower left in FIG. 9) and a parameter adaptation result of (lower right in FIG. 9) were smoothly adapted to maintain the stability in tracking.

In this manner, according to the adaptive control according to the present embodiment, better performance than that of non-adaptive design is obtainable.

### <Summary>

In the present embodiment, the trajectory tracking control design of the movable body 100 including the driven wheel 121 has been described. The system has been modeled by differential drive kinematics of two-dimensional position that is related to the primary response of the angle of the driven wheel to the angular velocity of the movable body 100. In addition, in the present embodiment, differential flatness of the system having a flat output of a two-dimensional position has been exhibited. Furthermore, the trajectory tracking controller in which the dynamic feedback from the differential flatness of the subsystem and a backstepping design for processing the dynamics of the driven wheel are combined together has been proposed, and the Lyapunov stability of the closed-loop system has been exhibited. In addition, the effectiveness of the trajectory tracking design according to the present embodiment has been demonstrated by the hardware experiment of the movable body. Further, the adaptive tracking control under the uncertainty of the parameters of the dynamics of the driven wheel 121 has been derived, and improvement in performance has been exhibited by numerical simulation.

### <Appendix A: Proof of Proposition 1>

### •Proof.

z = [z₁**,**z₂] ∈ ***R***² is set as an output satisfying z₁ = x and z₂ = y. In addition, *z* = [*z*₁,*z*₂] ∈ ***R***² and *z̅*^{(*l*)} = [*z*,*ż,* ... , z^{(*l*)}] ∈ ***R***² are expressed. In such a case, with regard to a given output of z, it is understood that the following transformations *v* = *v̅*(*z*⁽¹⁾(*t*)) and *θ* = *θ̅*(*z*⁽¹⁾(*t*)) are present, using Expressions (1) and (2).
[Mathematical Expression 31] $\overline{v} \left({z}^{\left(1\right)}\left(t\right)\right) = \sqrt{{\dot{z}}_{1}^{2} + {\dot{z}}_{2}^{2}} , \overline{θ} \left({z}^{\left(1\right)}\left(t\right)\right) = arctan \left(\frac{{\dot{z}}_{2}}{{\dot{z}}_{1}}\right)$ (31)

Furthermore, the differential of Expression (31) is obtained to associate with Expression (3), *δ* = *δ̅*(*z*⁽²⁾) is obtained from
[Mathematical Expression 32]. $\overline{δ} \left({\overline{z}}^{\left(2\right)}\left(t\right)\right) = - arctan \left(L\frac{\left({{z}^{¨}}_{2}{\dot{z}}_{1}-{{z}^{¨}}_{1}{\dot{z}}_{2}\right)}{{\left({\dot{z}}_{1}^{2}+{\dot{z}}_{2}^{2}\right)}^{3 / 2}}\right)$ (32)

Finally, by solving Expression (5) for ω, $ω = ω \left({\overline{z}}^{\left(3\right)}\left(t\right)\right)$ is obtained from
[Mathematical Expression 33]. $ω \left({\overline{z}}^{\left(3\right)}\left(t\right)\right) = - \frac{{\overline{v}}^{\left(1\right)} \left(z\left(t\right)\right)}{L} tan \left(\frac{{T}_{c} \overline{\dot{δ}} \left({\overline{z}}^{\left(3\right)}\left(t\right)\right) + \overline{δ} \left({\overline{z}}^{\left(2\right)}\left(t\right)\right)}{K}\right)$ (33)

Here, *δ̅*(*z̅*⁽³⁾(*t*)) is obtained by performing time differential of Expression (32), and Expression (34) is derived.
[Mathematical Expression 34] $\begin{matrix}\overline{\dot{δ}} \left({\overline{z}}^{\left(3\right)}\left(t\right)\right) = - \frac{L {\left({\dot{z}}_{1}^{2}+{\dot{z}}_{2}^{2}\right)}^{1 / 2}}{{\left({\dot{z}}_{1}^{2}+{\dot{z}}_{2}^{2}\right)}^{3} + {L}^{2} {\left({{z}^{¨}}_{2}{\dot{z}}_{1}+{{z}^{¨}}_{1}{\dot{z}}_{2}\right)}^{2}} \\ \times \left(\left({\dot{z}}_{1}^{2}+{\dot{z}}_{2}^{2}\right)\left({{z}^{⃛}}_{2}{\dot{z}}_{1}-{{z}^{⃛}}_{1}{\dot{z}}_{2}\right)-3\left({{z}^{¨}}_{2}{\dot{z}}_{1}-{{z}^{¨}}_{1}{\dot{z}}_{2}\right)\left({\dot{z}}_{1}{{z}^{¨}}_{1}+{\dot{z}}_{2}{{z}^{¨}}_{2}\right)\right)\end{matrix}$ (34)

Thus, for any output of z = [x, y], a transformation from the output and its differential into both the state and the input is present, and completes the proof of Proposition 1 accordingly.

### <Appendix B: Proof of Theorem 1>

- Proof. The stability of the closed-loop system described in Theorem 1 is to be shown in the Lyapunov analysis. x and y are set to reference error states defined by Theorem 1. By substituting Expressions (8) and (9) into Expression (10) and rewriting xy, Expressions (35), (36), and (37) are obtained.
   [Mathematical Expression 35] $\dot{x} = {A}_{x} x - b sin \left(θ\right) ψ$ (35) [Mathematical Expression 36] $\dot{y} = {A}_{y} y + b cos \left(θ\right) ψ$ (36) [Mathematical Expression 37] $\dot{ψ} = - cψ$ (37)

Here, with regard to i ∈ {x, y},
[Mathematical Expression 38] ${A}_{i} = \left[\begin{matrix}0 & 1 \\ - {k}_{pi} & - {k}_{di}\end{matrix}\right] , b = \left[\begin{matrix}0 \\ 1\end{matrix}\right]$ (38) is obtained.

Consideration is given to a Lyapunov function V defined by Theorem 1. Here, positive definite matrices Pₓ and P_{y} are solutions of the Lyapunov equation (Expression (39)) for a positive definite matrix Qᵢ where i ∈ {x, y}.
[Mathematical Expression 39] ${P}_{i} {A}_{i} + {{A}_{i}}^{T} {P}_{i} = - {Q}_{i}$ (39)

Time differential of the Lyapunov function is obtained, and the Lyapunov equation (39) is used. Then, Expression (40) is obtained.
[Mathematical Expression 40] $\dot{V} = - {x}^{T} {Q}_{x} x + 2 {x}^{T} {P}_{x} b sin \left(θ\right) ψ - {y}^{T} {Q}_{y} y + 2 {y}^{T} {P}_{y} b cos \left(θ\right) ψ - {dcψ}^{2}$ (40)

Since Qₓ is a positive definite value, *λₘᵢₙ*(*Qₓ*)***x**^{T}**x***≤ ***x***^{T}*Qₓx* ≤ *λₘₐₓ*(*Qₓ*)**x**^{T}***x*** is established, and the same reasoning applies to Q_{y}.

In addition, according to Young's inequality, $2 {x}^{T} {P}_{x} b sin \left(θ\right) ψ \leq {γ}_{x} {x}^{T} x + \frac{{sin}^{2} \left(θ\right) {\left‖{P}_{x}b\right‖}^{2}}{{γ}_{x}} {ψ}^{2}$ is established for any positive constant γₓ. By applying such an inequality, sin(θ)² ≤ 1, and cos(θ)² ≤ 1 to Expression (40), Expression (41) is obtained.
[Mathematical Expression 41] $\dot{V} \leq - \left({λ}_{min}\left({Q}_{x}\right)-{γ}_{x}\right) {x}^{T} x - \left({λ}_{min}\left({Q}_{y}\right)-{γ}_{y}\right) {y}^{T} y - \left(dc-\frac{{\left‖{P}_{x}b\right‖}^{2}}{{γ}_{x}}-\frac{{\left‖{P}_{y}b\right‖}^{2}}{{γ}_{y}}\right) {ψ}^{2}$ (41) [0113] Therefore, by setting ${γ}_{x} = \frac{{λ}_{min} \left({Q}_{x}\right)}{2}$ and ${γ}_{y} = \frac{{λ}_{min} \left({Q}_{y}\right)}{2}$, and selecting the parameter d as $d = \frac{2}{c} \left(\frac{{\left‖{P}_{x}b\right‖}^{2}}{{λ}_{min} \left({Q}_{x}\right)}+\frac{{\left‖{P}_{y}b\right‖}^{2}}{{λ}_{min} \left({Q}_{y}\right)}\right)$, Expression (41) becomes Expression (42).
[Mathematical Expression 42] $\dot{V} \leq - \frac{{λ}_{min} \left({Q}_{x}\right)}{2} {x}^{T} x - \frac{{λ}_{min} \left({Q}_{y}\right)}{2} {y}^{T} y - \frac{dc}{c} {ψ}^{2}$ (42)

Finally, by applying *λₘᵢₙ*(*Pₓ*)**x**^{T}***x*** ≤ ***x**^{T}Pₓ**x*** ≤ *λₘₐₓ*(*Pₓ*)***x**^{T}**x*** and similarly applying to y , *V̇ = -λV* is derived from Expression (42). Here, λ is as follows. $λ : = min \left\{\frac{{λ}_{min} \left({Q}_{x}\right)}{2 {λ}_{max} \left({P}_{x}\right)}, \frac{{λ}_{min} \left({Q}_{y}\right)}{2 {λ}_{max} \left({P}_{y}\right)}, c\right\}$

By applying a comparative lemma, V(t) ≤ V(0)e^{-λt} is obtained, and the proof of Theorem 1 is completed accordingly.

As described heretofore, according to the present embodiment, by applying the backstepping method in consideration of differential flatness to a three-wheeled model including the motion of the driven wheel, it becomes possible to construct a controller capable of compensating for instability analytically. According to the present embodiment, it becomes possible to achieve highly accurate trajectory tracking control at a small calculation cost, as compared with the technique of using numerical optimization. Further, according to the present embodiment, high tracking accuracy and vehicle stability are both achievable. Furthermore, according to the present embodiment, it becomes possible to handle a multiple input and output system.

### [Modifications]

In the above embodiment, an example in which the movable body 100 includes two drive wheels and one driven wheel has been described, but there is no intention to limit the present invention to this example. Two or more driven wheels may be provided. For example, in a case where there are two driven wheels, the angles of the respective wheels can be defined and a state equation similar to the above embodiment can be created. In addition, in the case where there are two driven wheels, it is assumed that one driven wheel is virtually present at the center position of them, and the above embodiment may be applied to such one virtual driven wheel. Further, the technique in the above embodiment is also applicable to a case where a movable body including the drive wheels tows another movable body including the driven wheel. For example, the technique is also applicable between a towing vehicle and a towed vehicle.

### <Summary of embodiments>

1. The control device according to the above embodiments is a control device (130) configured to control a movable body (100) including a drive wheel (120) and a driven wheel (121), the control device comprising:
   a control unit (305) configured to control a trajectory tracking operation of the movable body, based on a state equation (expression (1) - expression (5)) of the movable body, wherein
   the state equation is differentially flat, and
   the control unit derives an acceleration input value (a*) of the movable body for the movable body to track a target trajectory, based on the state equation that is differentially flat.

According to this embodiment, the tracking capability to track the target trajectory of the movable body including the drive wheels and the driven wheel can be improved.

2. In the control device according to the above embodiments, the control unit further applies a backstepping method to the state equation to derive an angular velocity input value (ω*) of the movable body for the movable body to track the target trajectory.

According to this embodiment, the tracking capability to track the target trajectory of the movable body including the drive wheels and the driven wheel can be improved.

3. In the control device according to the above embodiments, the control unit causes the movable body to operate in accordance with the acceleration input value and the angular velocity input value to perform the trajectory tracking operation.

According to this embodiment, the tracking capability to track the target trajectory of the movable body including the drive wheels and the driven wheel can be improved.

4. In the control device according to the above embodiments,
the state equation includes an expression (expression (5)) representing dynamics of the driven wheel, and
the control unit obtains a predetermined parameter (K, T_{c}) in an expression (expression (15)) derived from the expression representing the dynamics of the driven wheel as a function of time in adaptive control (expression (23) - expression (30)).

5. In the control device according to the above embodiments,
the state equation includes:
a first expression (expression (3)) for obtaining an angle change of the movable body, based on an angle of the driven wheel, a wheelbase of the movable body, and a speed of the movable body; and
a second expression (expression (5)) for obtaining an angle change of the driven wheel, based on the angle of the driven wheel, the wheelbase of the movable body, the speed of the movable body, and an angular velocity of the movable body.

According to this embodiment, the tracking capability to track the target trajectory of the movable body including the drive wheels and the driven wheel can be improved.

6. In the control device according to the above embodiments, the second expression is obtained by using a transfer function that transfers a delay of the angle of the driven wheel with respect to a target angle of the driven wheel.

According to this embodiment, the delay of the driven wheel can be reflected in the state equation, and thus the tracking capability to track the target trajectory of the movable body including the drive wheels and the driven wheel can be improved.

7. In the control device according to the above embodiments, the state equation includes a third expression (expression (1), expression (3)) for obtaining a position change of the movable body, based on a speed of the movable body and an angle of the drive wheel.

According to this embodiment, the tracking capability to track the target trajectory of the movable body including the drive wheels and the driven wheel can be improved.

8. The control device according to according to the above embodiments, further comprising a generation unit (304) configured to generate the target trajectory.

According to this embodiment, the tracking capability to track the target trajectory generated by the movable body itself can be improved.

9. The operation method of control device according to the above embodiments is an operation method of a control device configured to control a movable body including a drive wheel and a driven wheel, the operation method comprising:
controlling a trajectory tracking operation of the movable body, based on a state equation of the movable body, wherein
the state equation is differentially flat, and
the controlling derives an acceleration input value of the movable body for the movable body to track a target trajectory, based on the state equation that is differentially flat.

According to this embodiment, the tracking capability to track the target trajectory of the movable body including the drive wheels and the driven wheel can be improved.

10. A program according to the above embodiment is a program for causing a computer to execute an operation method of a control device according to the above embodiment.

According to this embodiment, the processing according to the above embodiment is achievable by such a program.

11. A storage medium according to the above embodiment is a non-transitory computer-readable storage medium storing a program for causing a computer to execute an operation method of a control device according to the above embodiment.

According to this embodiment, the processing according to the above embodiment is achievable in such a storage medium.

According to the present invention, tracking capability to track a target trajectory of a movable body including drive wheels and a driven wheel can be improved.

The invention is not limited to the foregoing embodiments, and various variations/changes are possible within the spirit of the invention.

## Claims

1. A control device (130) configured to control a movable body (100) including a drive wheel (120) and a driven wheel (121), the control device comprising:
control means (305) for controlling a trajectory tracking operation of the movable body, based on a state equation of the movable body, wherein
the state equation is differentially flat, and
the control means derives an acceleration input value of the movable body for the movable body to track a target trajectory, based on the state equation that is differentially flat.

2. The control device according to claim 1, wherein the control means further applies a backstepping method to the state equation to derive an angular velocity input value of the movable body for the movable body to track the target trajectory.

3. The control device according to claim 2, wherein the control means causes the movable body to operate in accordance with the acceleration input value and the angular velocity input value to perform the trajectory tracking operation.

4. The control device according to any one of claims 1 to 3, wherein
the state equation includes an expression representing dynamics of the driven wheel, and
the control means obtains a predetermined parameter in an expression derived from the expression representing the dynamics of the driven wheel as a function of time in adaptive control.

5. The control device according to any one of claims 1 to 4, wherein
the state equation includes:
a first expression for obtaining an angle change of the movable body, based on an angle of the driven wheel, a wheelbase of the movable body, and a speed of the movable body; and
a second expression for obtaining an angle change of the driven wheel, based on the angle of the driven wheel, the wheelbase of the movable body, the speed of the movable body, and an angular velocity of the movable body.

6. The control device according to claim 5, wherein the second expression is obtained by using a transfer function that transfers a delay of the angle of the driven wheel with respect to a target angle of the driven wheel.

7. The control device according to any one of claims 1 to 6, wherein the state equation includes a third expression for obtaining a position change of the movable body, based on a speed of the movable body and an angle of the drive wheel.

8. The control device according to any one of claims 1 to 7, further comprising generation means (304) for generating the target trajectory.

9. An operation method of a control device configured to control a movable body including a drive wheel and a driven wheel, the operation method comprising:
controlling a trajectory tracking operation of the movable body, based on a state equation of the movable body, wherein
the state equation is differentially flat, and
the controlling derives an acceleration input value of the movable body for the movable body to track a target trajectory, based on the state equation that is differentially flat.

10. A program for causing a computer to execute the operation method of claim 9.
